# EUROPÄISCHE PATENTSCHRIFT

(11) **EP 3 354 538 B1**
(45) Veröffentlichungstag und Bekanntmachung des Hinweises auf die Patenterteilung: **13.05.2020**
(21) Anmeldenummer: 18152873.8
(22) Anmeldetag: 23.01.2018
(51) Int. Cl.: B62D 1/181, B62D 1/183

(54) **VORRICHTUNG ZUM REVERSIERBAREN VERSTELLEN EINER LENKSÄULE EINES KRAFTFAHRZEUGES**
DEVICE FOR REVERSIBLE ADJUSTING OF A STEERING COLUMN OF A MOTOR VEHICLE
DISPOSITIF DE RÉGLAGE RÉVERSIBLE D'UNE COLONNE DE DIRECTION D'UN VÉHICULE AUTOMOBILE

(30) Priorität: 25.01.2017 DE 102017201165
(43) Veröffentlichungstag der Anmeldung: 01.08.2018
(73) Patentinhaber: Robert Bosch GmbH, 70442 Stuttgart (DE)
(72) Erfinder: Nagy, Daniel, 4032 Debrecen (HU)

(56) Entgegenhaltungen:
- EP-A1- 0 594 173
- EP-A1- 1 655 201
- EP-A2- 1 431 100
- DE-C1- 3 536 285

## Beschreibung

Die Erfindung betrifft eine Vorrichtung zum reversierbaren Verstellen einer Lenksäule eines Kraftfahrzeuges.

### Stand der Technik

Lenksäulenhalterungen, welche fest oder auch verstellbar ausgeführt sein können, gelten als hinlänglich bekannt. So sind insbesondere im PKW-Bereich Lenksäulenhalterungen mit elektromotorisch betriebenen Verstellvorrichtungen bekannt, die eine Verstellung der Lenksäule in ihrer Höhe und/oder ihrer Neigung ermöglichen. Auch im NKW-Bereich sind solche Lenksäulenhalterungen bekannt. Jedoch erweist sich die elektromotorische Verstellung als sehr langsam und ist außerdem begrenzt auf einen vergleichsweise geringen Verstellbereich. Insbesondere im NKW-Bereich werden jedoch Lenksäulenhalterungen benötigt, die einen großen Verstellbereich aufweisen. Hierzu werden üblicherweise Konstruktionen eingesetzt, bei denen die Lenksäule im Allgemeinen manuell in eine annähernd senkrechte Stellung geschwenkt werden kann, um somit den Einstieg in bzw. den Ausstieg aus dem Fahrzeug zu vereinfachen.

Die DE 10 2009 001 324 A1 offenbart eine Lenksäulenhalterung mit einem Trägergehäuse für eine Lenksäule, die in einer zumindest drehbeweglich angeordneten Lenksäulenaufnahme gelagert ist, wodurch zumindest die Neigung der Lenksäule veränderbar ist und wobei zumindest eine erste Einrastung und eine zweite Einrastung vorgesehen sind, die mit dem Trägergehäuse verbindbar sind, und dass eine Schnellspannvorrichtung zum Einrasten in einer der Einrastungen vorgesehen ist, wodurch die Lenksäule in einer ersten Neigungsposition oder in einer zweiten Neigungsposition einrastbar ist.

Die EP 1 655 201 A1 offenbart eine Lenksäulenanordnung, die als nächstliegender Stand der Technik betrachtet wird, bei der Mittel zur Höhenverstellung und Mittel zur Längsverstellung vorgesehen sind.

Hierbei ist wünschenswert, dass die Lenksäulenhalterung kleinstmögliche Abmessungen aufweist, eine Höhen- und Neigungsverstellung der Lenksäule geräuschlos und komfortabel durchführbar ist und einen vergrößerten Verstellbereich aufweist.

Diese Aufgabe wird mit einer Vorrichtung zum reversierbaren Verstellen einer Lenksäule eines Kraftfahrzeuges mit den Merkmalen des Patentanspruchs 1 gelöst.

### Offenbarung der Erfindung

Die vorliegende Erfindung schafft eine Vorrichtung zum reversierbaren Verstellen einer Lenksäule eines Kraftfahrzeuges, mit einem Lagerbock, in welchem ein Lenksäulengehäuse mit der in dem Lenksäulengehäuse angeordneten Lenksäule verstellbar gelagert ist, wobei eine erste pneumatische Verstelleinrichtung, welche an einem ersten axialen Endabschnitt mit einem relativ zum Lenksäulengehäuse positionsfest angeordneten Abschnitt der Vorrichtung und an einem zweiten axialen Endabschnitt mit dem Lenksäulengehäuse verbunden ist, wobei die erste pneumatische Verstelleinrichtung dazu ausgebildet ist, einen Neigungswinkel des Lenksäulengehäuses zu verstellen, und eine zweite pneumatische Verstelleinrichtung, welche an einem ersten axialen Endabschnitt mit einem Befestigungspunkt des Kraftfahrzeuges verbindbar und an einem zweiten axialen Endabschnitt mit dem Lenksäulengehäuse verbunden ist, wobei die zweite pneumatische Verstelleinrichtung dazu ausgebildet ist, eine Höhe des Lenksäulengehäuses zu verstellen.

Eine Idee der vorliegenden Erfindung ist es, eine Vorrichtung zum reversierbaren Verstellen einer Lenksäule eines Kraftfahrzeuges bereitzustellen, wobei die Lenksäulenhalterung kleinstmögliche Abmessungen aufweist, eine Höhen- und Neigungsverstellung der Lenksäule geräuschlos und komfortabel durchführbar ist und einen vergrößerten Verstellbereich aufweist.
Des Weiteren ist es in vorteilhafter Weise möglich, die erfindungsgemäße Vorrichtung in einem bestehenden Lagerbock zu verbauen, sodass eine kostengünstige Integration in bestehende Nkw-Lenksysteme durchführbar ist. Des Weiteren sind die erste und zweite pneumatische Verstelleinrichtung mit einem bereits im Nutzfahrzeug angeordneten Pneumatikzylinder bzw. dem Fußpedal zur Betätigung des Pneumatikzylinders voll kompatibel.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass die erste pneumatische Verstelleinrichtung und die zweite pneumatische Verstelleinrichtung jeweils eine erste Gasdruckfeder und eine zweite Gasdruckfeder aufweisen, welche in einem gemeinsamen Gehäuse angeordnet sind, wobei die erste Gasdruckfeder und die zweite Gasdruckfeder in entgegengesetzter Richtung angeordnet sind. Durch Vorsehen der in entgegengesetzter Richtung angeordneten ersten Gasdruckfeder und zweiten Gasdruckfeder können die erste Gasdruckfeder und die zweite Gasdruckfeder in vorteilhafter Weise für unterschiedliche Zwecke eingesetzt werden.

Gemäß einer weiteren bevorzugten Weiterbildung ist vorgesehen, dass eine Kolbenstange der ersten Gasdruckfeder der ersten pneumatischen Verstelleinrichtung mit dem Lenksäulengehäuse und eine Kolbenstange der zweiten Gasdruckfeder der ersten pneumatischen Verstelleinrichtung mit einem relativ zum Lenksäulengehäuse positionsfest angeordneten Abschnitt der Vorrichtung verbunden ist. Somit ist die zweite Gasdruckfeder in vorteilhafter Weise dazu ausgebildet, durch Auslenken der Kolbenstange der zweiten Gasdruckfeder eine Stellung des Lenksäulengehäuses zu verändern.

Gemäß einer weiteren bevorzugten Weiterbildung ist vorgesehen, dass die erste Gasdruckfeder der ersten pneumatischen Verstelleinrichtung dazu ausgebildet ist, das Lenksäulengehäuse, bei Entriegelung des Lenksäulengehäuses, von einer voreingestellten Neigungsstellung in eine Easy-Entry-Stellung oder von der Easy-Entry-Stellung in die voreingestellte Neigungsstellung zu stellen, in welcher die Lenksäule im Wesentlichen vertikal angeordnet ist. Die erste Gasdruckfeder der ersten pneumatischen Verstelleinrichtung ist somit bei Entriegelung des Lenksäulengehäuses in der Lage, die Verstellung der Lenksäule durch einen Benutzer durch deren Federkraft zu unterstützen, sodass eine komfortable und leichtgängige Verstellung der Lenksäule ermöglicht wird.

Gemäß einer weiteren bevorzugten Weiterbildung ist vorgesehen, dass die zweite Gasdruckfeder der ersten pneumatischen Verstelleinrichtung dazu ausgebildet ist, das Lenksäulengehäuse, bei Entriegelung des Lenksäulengehäuses und bei Lösen der zweiten Gasdruckfeder, von der voreingestellten Neigungsstellung in eine weitere Neigungsstellung innerhalb eines Verstellbereichs des Lenksäulengehäuses zu stellen. Somit ermöglicht die zweite Gasdruckfeder der ersten pneumatischen Verstelleinrichtung in vorteilhafter Weise eine Verstellung des Lenksäulengehäuses und der darin angeordneten Lenksäule innerhalb des Verstellbereichs.

Gemäß einer weiteren bevorzugten Weiterbildung ist vorgesehen, dass die erste Gasdruckfeder der ersten pneumatischen Verstelleinrichtung eine Gasdruckfeder herkömmlicher Bauart ist, wobei eine Position der Kolbenstange der zweiten Gasdruckfeder der ersten pneumatischen Verstelleinrichtung feststellbar ist, und wobei die erste Gasdruckfeder der ersten pneumatischen Verstelleinrichtung eine geringere Federkraft als die zweite Gasdruckfeder der ersten pneumatischen Verstelleinrichtung aufweist. Durch Ausbilden der ersten Gasdruckfeder der ersten pneumatischen Verstelleinrichtung mit einer geringeren Federkraft als die zweite Gasdruckfeder der ersten pneumatischen Verstelleinrichtung kann in vorteilhafter Weise ermöglicht werden, dass die größere Federkraft der zweiten Gasdruckfeder der ersten pneumatischen Verstelleinrichtung bei der Neigungsverstellung des Lenksäulengehäuses die Kolbenstange der ersten Gasdruckfeder der ersten pneumatischen Verstelleinrichtung komprimiert, sodass dadurch die Verstellung des Lenksäulengehäuses ermöglicht wird.

Gemäß einer weiteren bevorzugten Weiterbildung ist vorgesehen, dass eine Kolbenstange der ersten Gasdruckfeder der zweiten pneumatischen Verstelleinrichtung mit dem Lenksäulengehäuse verbunden ist und eine Kolbenstange der zweiten Gasdruckfeder der zweiten pneumatischen Verstelleinrichtung mit dem Befestigungspunkt des Kraftfahrzeuges verbindbar ist. Somit kann sich die zweite pneumatische Verstelleinrichtung durch die erste Gasdruckfeder an dem Befestigungspunkt des Kraftfahrzeuges abstützen und mittels der zweiten Gasdruckfeder der zweiten pneumatischen Verstelleinrichtung das Lenksäulengehäuse verstellen.

Gemäß einer weiteren bevorzugten Weiterbildung ist vorgesehen, dass die Kolbenstange der ersten Gasdruckfeder der zweiten pneumatischen Verstelleinrichtung bei dem Stellen des Lenksäulengehäuses von der voreingestellten Neigungsstellung in die Easy-Entry-Stellung oder von der Easy-Entry-Stellung in die voreingestellte Neigungsstellung mit dem sich bewegenden Lenksäulengehäuse mitführbar ist. Die erste pneumatische Verstelleinrichtung und die zweite pneumatische Verstelleinrichtung sind somit stets beide mit dem Lenksäulengehäuse verbunden, sodass in vorteilhafter Weise eine gleichzeitige Verstellung von Neigung und Höhe der in dem Lenksäulengehäuse angeordneten Lenksäule oder alternativ lediglich eine Verstellung der Höhe oder eine Verstellung der Neigung möglich ist.

Gemäß einer weiteren bevorzugten Weiterbildung ist vorgesehen, dass die zweite Gasdruckfeder der zweiten pneumatischen Verstelleinrichtung dazu ausgebildet ist, das Lenksäulengehäuse, bei Entriegelung des Lenksäulengehäuses und bei Lösen der zweiten Gasdruckfeder, von einer voreingestellten Höhenstellung in eine weitere Höhenstellung innerhalb eines Verstellbereichs des Lenksäulengehäuses zu stellen. Aufgrund der Blockierbarkeit der zweiten Gasdruckfeder der zweiten pneumatischen Verstelleinrichtung sowie der Freigebbarkeit bzw. Verstellbarkeit eines Hubs der zweiten Gasdruckfeder der zweiten pneumatischen Verstelleinrichtung kann in vorteilhafter Weise eine Höhenverstellung der in dem Lenksäulengehäuse angeordneten Lenksäule vorgenommen werden.

Gemäß einer weiteren bevorzugten Weiterbildung ist vorgesehen, dass die erste Gasdruckfeder der zweiten pneumatischen Verstelleinrichtung eine größere Federkraft als die zweite Gasdruckfeder der zweiten pneumatischen Verstelleinrichtung aufweist. Somit kann sichergestellt werden, dass bei Lösen bzw. Freigeben der zweiten Gasdruckfeder aus einer blockierten Stellung die erste Gasdruckfeder die zweite Gasdruckfeder in Position hält, sodass es nicht zu einer ungewollten Höhenverstellung der Lenksäule ohne Einwirken des Benutzers kommt.

Gemäß einer weiteren bevorzugten Weiterbildung ist vorgesehen, dass die erste pneumatische Verstelleinrichtung und die zweite pneumatische Verstelleinrichtung jeweils eine Gasdruckfeder aufweisen, wobei ein Gehäuse der Gasdruckfeder der ersten pneumatischen Verstelleinrichtung mit einem relativ zum Lenksäulengehäuse positionsfest angeordneten Abschnitt der Vorrichtung und eine Kolbenstange der Gasdruckfeder der ersten pneumatischen Verstelleinrichtung mit dem Lenksäulengehäuse verbunden ist. Gemäß der vorliegenden Ausführungsform weist die erste pneumatische Verstelleinrichtung in vorteilhafter Weise nur eine einzelne Gasdruckfeder auf sowie die zweite pneumatische Verstelleinrichtung ebenfalls nur eine einzelne Gasdruckfeder auf. Selbige sind vorzugsweise in der Lage, die gleichen Funktionen wie die pneumatischen Verstelleinrichtungen der ersten Ausführungsform durchzuführen.

Gemäß einer weiteren bevorzugten Weiterbildung ist vorgesehen, dass die Gasdruckfeder der ersten pneumatischen Verstelleinrichtung und der zweiten pneumatischen Verstelleinrichtung einen verstellbaren Hub aufweisen, wobei die Gasdruckfeder der ersten pneumatischen Verstelleinrichtung dazu ausgebildet ist, das Lenksäulengehäuse, bei Entriegelung des Lenksäulengehäuses, von einer voreingestellten Neigungsstellung in eine Easy-Entry-Stellung oder von der Easy-Entry-Stellung in die voreingestellte Neigungsstellung zu stellen, in welcher die Lenksäule im Wesentlichen vertikal angeordnet ist, und wobei die Gasdruckfeder der ersten pneumatischen Verstelleinrichtung dazu ausgebildet ist, das Lenksäulengehäuse, bei Entriegelung des Lenksäulengehäuses und bei Freigeben einer Verstellung des Hubs der Gasdruckfeder, von der voreingestellten Neigungsstellung in eine weitere Neigungsstellung innerhalb eines Verstellbereichs des Lenksäulengehäuses zu stellen. Die Gasdruckfeder der ersten pneumatischen Verstelleinrichtung ist somit in vorteilhafter Weise in der Lage, sowohl die Funktion der Stellung der Lenksäule von einer voreingestellten Neigungsposition bzw. Fahrposition in die Easy-Entry-Stellung durchzuführen, als auch die Neigungsverstellung der Lenksäule von der voreingestellten Neigungsstellung in eine weitere Neigungsstellung durchzuführen.

Gemäß einer weiteren bevorzugten Weiterbildung ist vorgesehen, dass ein Gehäuse der Gasdruckfeder der zweiten pneumatischen Verstelleinrichtung mit dem Befestigungspunkt des Kraftfahrzeuges verbindbar und eine Kolbenstange der zweiten Gasdruckfeder der zweiten pneumatischen Verstelleinrichtung mit dem Lenksäulengehäuse verbunden ist. Somit kann sich das Gehäuse der Gasdruckfeder der zweiten pneumatischen Verstelleinrichtung in vorteilhafter Weise an dem Befestigungspunkt des Kraftfahrzeuges abstützen und die Kolbenstange der zweiten Gasdruckfeder der zweiten pneumatischen Verstelleinrichtung bei Betätigung des zugeordneten Kolbens das Lenksäulengehäuse verstellen.

Gemäß einer weiteren bevorzugten Weiterbildung ist vorgesehen, dass die Kolbenstange der Gasdruckfeder der zweiten pneumatischen Verstelleinrichtung bei dem Stellen des Lenksäulengehäuses von der voreingestellten Neigungsstellung in die Easy-Entry-Stellung oder von der Easy-Entry-Stellung in die voreingestellte Neigungsstellung mit dem sich bewegenden Lenksäulengehäuse mitführbar ist. Die erste pneumatische Verstelleinrichtung und die zweite pneumatische Verstelleinrichtung sind somit stets beide mit dem Lenksäulengehäuse verbunden, sodass in vorteilhafter Weise eine gleichzeitige Verstellung von Neigung und Höhe der in dem Lenksäulengehäuse angeordneten Lenksäule oder alternativ lediglich eine Verstellung der Höhe oder eine Verstellung der Neigung möglich ist.

Gemäß einer weiteren bevorzugten Weiterbildung ist vorgesehen, dass die Gasdruckfeder der zweiten pneumatischen Verstelleinrichtung dazu ausgebildet ist, das Lenksäulengehäuse, bei Entriegelung des Lenksäulengehäuses und bei Freigeben einer Verstellung des Hubs der Gasdruckfeder, von einer voreingestellten Höhenstellung in eine weitere Höhenstellung innerhalb eines Verstellbereichs des Lenksäulengehäuses zu stellen. Aufgrund der Blockierbarkeit der zweiten Gasdruckfeder der zweiten pneumatischen Verstelleinrichtung sowie der Freigebbarkeit bzw. Verstellbarkeit eines Hubs der zweiten Gasdruckfeder der zweiten pneumatischen Verstelleinrichtung kann in vorteilhafter Weise eine Höhenverstellung der in dem Lenksäulengehäuse angeordneten Lenksäule vorgenommen werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung einer Vorrichtung zum reversierbaren Verstellen einer Lenksäule eines Kraftfahrzeuges gemäß einer ersten Ausführungsform der Erfindung;
- Fig. 2: eine schematische Darstellung der Vorrichtung zum reversierbaren Verstellen der Lenksäule des Kraftfahrzeuges gemäß der ersten Ausführungsform der Erfindung;
- Fig. 3: eine schematische Darstellung der Vorrichtung zum reversierbaren Verstellen der Lenksäule des Kraftfahrzeuges gemäß der ersten Ausführungsform der Erfindung;
- Fig. 4: eine schematische Darstellung der Vorrichtung zum reversierbaren Verstellen der Lenksäule des Kraftfahrzeuges gemäß der ersten Ausführungsform der Erfindung;
- Fig. 5: eine schematische Darstellung der Vorrichtung zum reversierbaren Verstellen der Lenksäule des Kraftfahrzeuges gemäß der ersten Ausführungsform der Erfindung;
- Fig. 6: eine schematische Darstellung der Vorrichtung zum reversierbaren Verstellen der Lenksäule des Kraftfahrzeuges gemäß der ersten Ausführungsform der Erfindung; und
- Fig. 7: eine schematische Darstellung der Vorrichtung zum reversierbaren Verstellen der Lenksäule des Kraftfahrzeuges gemäß einer zweiten bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

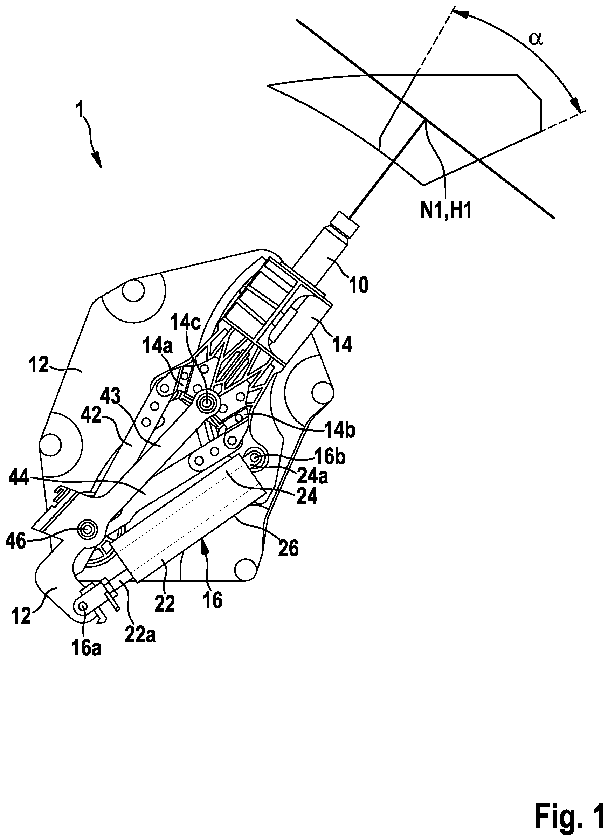

Fig. 1 zeigt eine schematische Darstellung einer Vorrichtung zum reversierbaren Verstellen einer Lenksäule eines Kraftfahrzeuges gemäß einer ersten Ausführungsform der Erfindung.

Die Vorrichtung 1 zum reversierbaren Verstellen der Lenksäule 10 des Kraftfahrzeuges weist einen Lagerbock 12 auf, in welchem ein Lenksäulengehäuse 14 mit der in dem Lenksäulengehäuse 14 angeordneten Lenksäule 10 verstellbar gelagert ist. Die Vorrichtung 1 weist des Weiteren eine erste pneumatische Verstelleinrichtung 16 und eine zweite pneumatische Verstelleinrichtung 18 auf.

Die erste pneumatische Verstelleinrichtung 16 ist an einem ersten axialen Endabschnitt 16a mit einem relativ zum Lenksäulengehäuse 14 positionsfest angeordneten Abschnitt 12a der Vorrichtung 1 verbunden. Überdies ist die erste pneumatische Verstelleinrichtung 16 an einem zweiten axialen Endabschnitt 16b mit dem Lenksäulengehäuse 14 verbunden. Die erste pneumatische Verstelleinrichtung 16 ist dazu ausgebildet, einen Neigungswinkel α des Lenksäulengehäuses 14 zu verstellen.

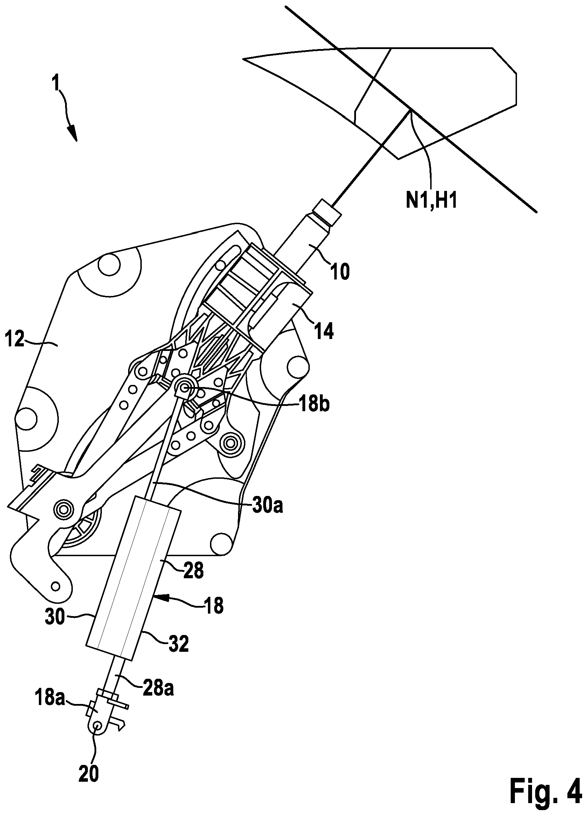

Des Weiteren weist die Vorrichtung 1 die (in Fig. 1 nicht gezeigte) zweite pneumatische Verstelleinrichtung 18 auf, welche dazu ausgebildet ist, eine Höhe des Lenksäulengehäuses 14 zu verstellen. Die zweite pneumatische Verstelleinrichtung ist aus Gründen der Übersichtlichkeit separat von der ersten pneumatischen Verstelleinrichtung 16 in den Figuren 4 bis 6 dargestellt. Die erste pneumatische Verstelleinrichtung 16 und die zweite pneumatische Verstelleinrichtung 18 sind beide mit dem Lenksäulengehäuse 14 gekoppelt, sodass eine gleichzeitige Verstellung von Neigung und Höhe der in dem Lenksäulengehäuse 14 angeordneten Lenksäule 10 möglich ist.

Das Lenksäulengehäuse 14 weist an einem unteren axialen Endabschnitt einen ersten Schenkel 14a und einen zweiten Schenkel 14b auf. An dem ersten Schenkel 14a, welcher sich in Breitenrichtung des Lenksäulengehäuses 14 erstreckt, ist in einem äußeren Bereich des ersten Schenkels 14a ein erstes Führungsblech 42 befestigt, welches an einem entgegengesetzten Endabschnitt an einem Lager 46 in Axialrichtung beweglich gelagert ist.

Ein zweites Führungsblech 43 ist an dem unteren axialen Endabschnitt des Lenksäulengehäuses 14 in einem mittigen Bereich an einem Befestigungspunkt 14c angebracht. Das zweite Führungsblech 43 ist an einem entgegengesetzten Endabschnitt an dem Lager 46 in Axialrichtung fest gelagert.

An dem zweiten Schenkel 14b, welcher sich in Breitenrichtung des Lenksäulengehäuses 14 erstreckt, ist in einem äußeren Bereich des zweiten Schenkels 14b ein drittes Führungsblech 44 befestigt, welches an einem entgegengesetzten Endabschnitt an dem Lager 46 in Axialrichtung beweglich gelagert ist.

Die erste pneumatische Verstelleinrichtung 16 weist eine erste Gasdruckfeder 24 und eine zweite Gasdruckfeder 22 auf. Die erste Gasdruckfeder 24 und die zweite Gasdruckfeder 22 sind vorzugsweise in einem gemeinsamen Gehäuse 26 angeordnet. Alternativ können die erste Gasdruckfeder 24 und die zweite Gasdruckfeder 22 beispielsweise in zwei separaten Gehäusen angeordnet sein, welche in geeigneter Art und Weise, beispielsweise durch Schweißen, miteinander verbunden sind.

Die erste Gasdruckfeder 24 und die zweite Gasdruckfeder 22 sind in entgegengesetzter Richtung angeordnet.

Eine Kolbenstange 24a der ersten Gasdruckfeder 24 der ersten pneumatischen Verstelleinrichtung 16 ist mit dem Lenksäulengehäuse 14 verbunden. Eine Kolbenstange 22a der zweiten Gasdruckfeder 22 der ersten pneumatischen Verstelleinrichtung 16 ist mit einem relativ zum Lenksäulengehäuse 14 positionsfest angeordneten Abschnitt 12a der Vorrichtung 1 verbunden.

In der Darstellung der Fig. 1 ist die in dem Lenksäulengehäuse 14 angeordnete Lenksäule 10 in einer voreingestellten Neigungsstellung N1 sowie in einer voreingestellten Höhenstellung H1 angeordnet.

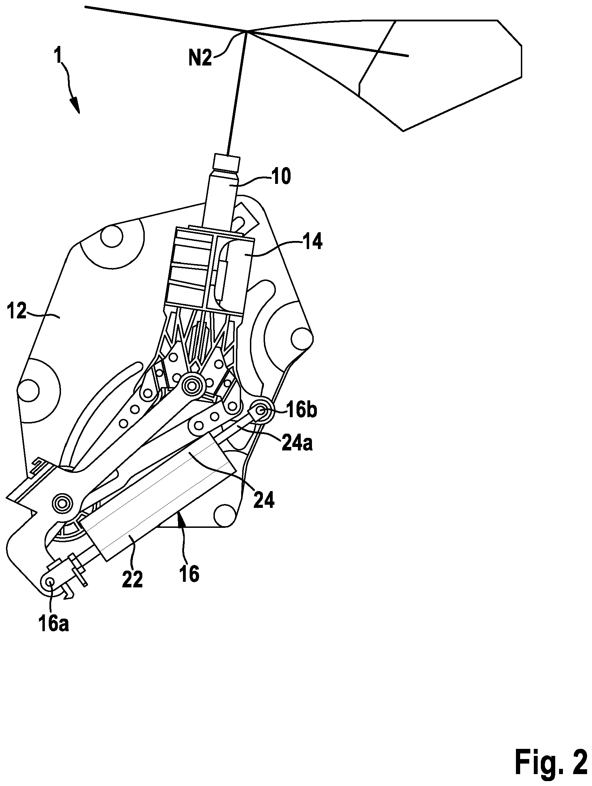

Fig. 2 zeigt eine schematische Darstellung der Vorrichtung zum reversierbaren Verstellen der Lenksäule des Kraftfahrzeuges gemäß der ersten Ausführungsform der Erfindung.

Die erste Gasdruckfeder 24 der ersten pneumatischen Verstelleinrichtung 16 ist dazu ausgebildet, das Lenksäulengehäuse 14, bei Entriegelung des Lenksäulengehäuses 14, von der voreingestellten Neigungsstellung N1 in die in Fig. 2 gezeigte Easy-Entry-Stellung N2 zu stellen. Ebenfalls ist die erste Gasdruckfeder 24 der ersten pneumatischen Verstelleinrichtung 16 dazu ausgebildet, das Lenksäulengehäuse 14, bei Entriegelung des Lenksäulengehäuses 14, von der Easy-Entry-Stellung N2 in die vorherige bzw. zuvor eingestellte Neigungsstellung N1 wieder rückzustellen. In der Easy-Entry-Stellung N2 ist die Lenksäule 10 im Wesentlichen vertikal angeordnet.

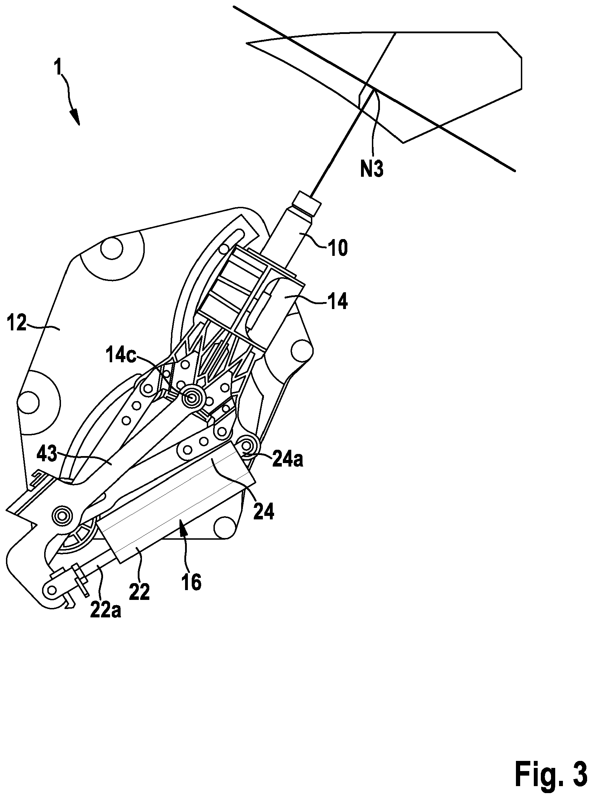

Fig. 3 zeigt eine schematische Darstellung der Vorrichtung zum reversierbaren Verstellen der Lenksäule des Kraftfahrzeuges gemäß der ersten Ausführungsform der Erfindung.

Die zweite Gasdruckfeder 22 der ersten pneumatischen Verstelleinrichtung 16 ist dazu ausgebildet, das Lenksäulengehäuse 14, bei Entriegelung des Lenksäulengehäuses 14 und bei Lösen der zweiten Gasdruckfeder 22, von der voreingestellten Neigungsstellung N1 in eine weitere Neigungsstellung N3 innerhalb des Verstellbereichs des Lenksäulengehäuses 14 zu stellen. Die erste Gasdruckfeder 24 der ersten pneumatischen Verstelleinrichtung 16 ist eine Gasdruckfeder herkömmlicher Bauart. Eine Position der Kolbenstange 22a der zweiten Gasdruckfeder 22 der ersten pneumatischen Verstelleinrichtung 16 ist feststellbar. Die erste Gasdruckfeder 24 der ersten pneumatischen Verstelleinrichtung 16 weist eine geringere Federkraft als die zweite Gasdruckfeder 22 der ersten pneumatischen Verstelleinrichtung 16 auf.

Bei der Neigungsverstellung des Lenksäulengehäuses 14 wird das Lenksäulengehäuse 14 um den als Schwenkpunkt wirkenden Befestigungspunkt 14c des zweiten Führungsblechs 43 geschwenkt.

Fig. 4 zeigt eine schematische Darstellung der Vorrichtung zum reversierbaren Verstellen der Lenksäule des Kraftfahrzeuges gemäß der ersten Ausführungsform der Erfindung.

Eine Kolbenstange 30a der ersten Gasdruckfeder 30 der zweiten pneumatischen Verstelleinrichtung 18 ist mit dem Lenksäulengehäuse 14 verbunden. Eine Kolbenstange 28a der zweiten Gasdruckfeder 28 der zweiten pneumatischen Verstelleinrichtung 18 ist mit dem Befestigungspunkt 20 des Kraftfahrzeuges verbindbar.

Das Lenksäulengehäuse 14 ist in Fig. 4 in der voreingestellten Neigungsstellung N1 sowie der voreingestellten Höhenstellung H1 dargestellt.

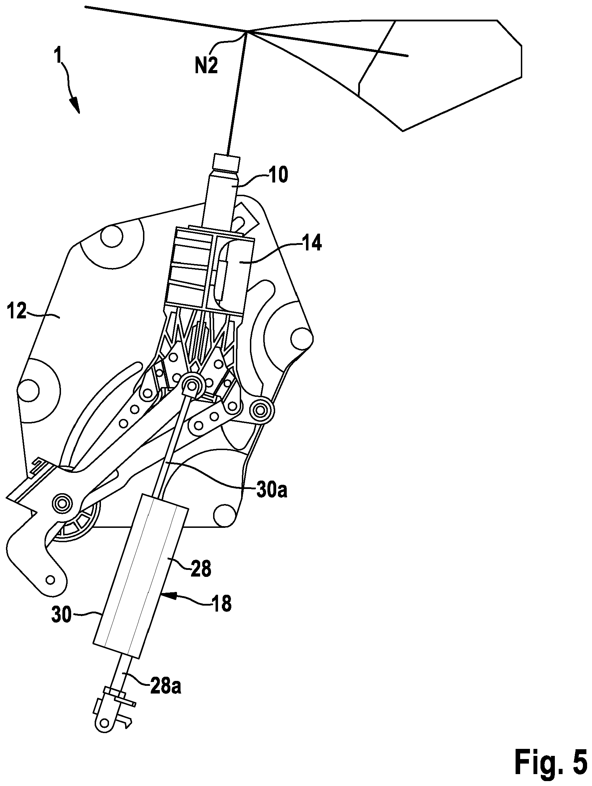

Fig. 5 zeigt eine schematische Darstellung der Vorrichtung zum reversierbaren Verstellen der Lenksäule des Kraftfahrzeuges gemäß der ersten Ausführungsform der Erfindung.

Die Kolbenstange 30a der ersten Gasdruckfeder 30 der zweiten pneumatischen Verstelleinrichtung 18 ist bei dem Stellen des Lenksäulengehäuses 14 von der voreingestellten Neigungsstellung in die Easy-Entry-Stellung N2 oder von der Easy-Entry-Stellung N2 in die voreingestellte Neigungsstellung mit dem sich bewegenden Lenksäulengehäuse 14 mitführbar. Somit ist die erste pneumatische Verstelleinrichtung 16 als auch die zweite pneumatische Verstelleinrichtung 18 jeweils mit dem Lenksäulengehäuse 14 verbunden und es kann somit eine gleichzeitige Neigungs- und Höhenverstellung des Lenksäulengehäuses erfolgen.

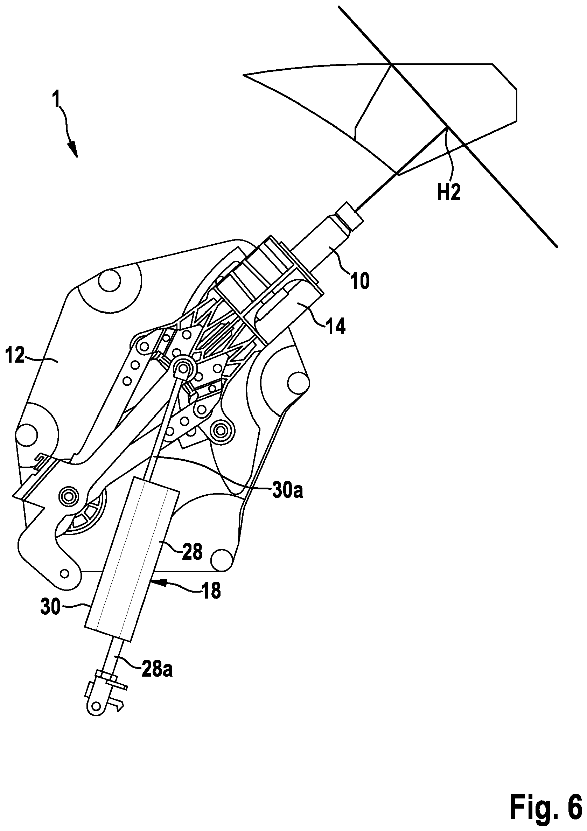

Fig. 6 zeigt eine schematische Darstellung der Vorrichtung zum reversierbaren Verstellen der Lenksäule des Kraftfahrzeuges gemäß der ersten Ausführungsform der Erfindung.

Die zweite Gasdruckfeder 28 der zweiten pneumatischen Verstelleinrichtung 18 ist dazu ausgebildet, das Lenksäulengehäuse 14, bei Entriegelung des Lenksäulengehäuses 14 und bei Lösen der zweiten Gasdruckfeder 28, von der voreingestellten Höhenstellung in eine weitere Höhenstellung H2 innerhalb des Verstellbereichs des Lenksäulengehäuses 14 zu stellen. Die erste Gasdruckfeder 30 der zweiten pneumatischen Verstelleinrichtung 18 weist eine größere Federkraft als die zweite Gasdruckfeder 28 der zweiten pneumatischen Verstelleinrichtung 18 auf.

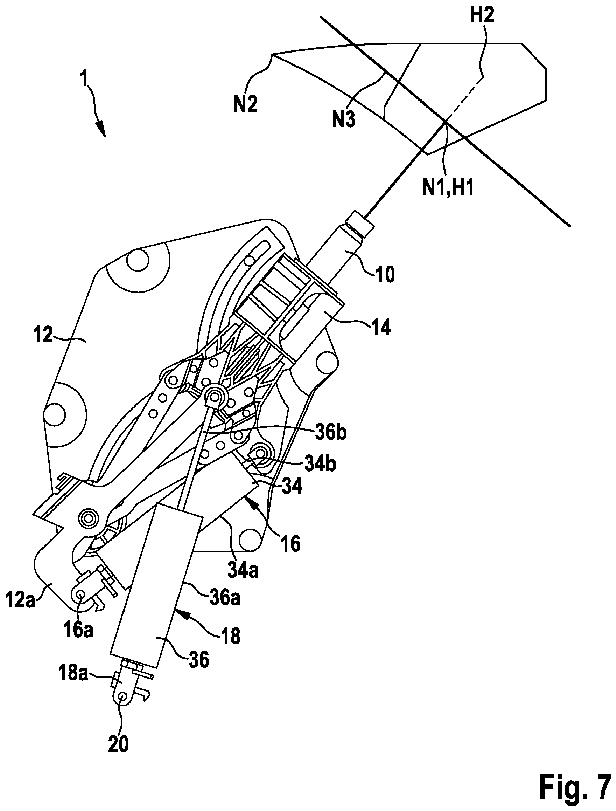

Fig. 7 zeigt eine schematische Darstellung der Vorrichtung zum reversierbaren Verstellen der Lenksäule des Kraftfahrzeuges gemäß einer zweiten bevorzugten Ausführungsform der Erfindung.

Die erste pneumatische Verstelleinrichtung 16 und die zweite pneumatische Verstelleinrichtung 18 weisen in der vorliegenden zweiten Ausführungsform jeweils eine einzelne Gasdruckfeder 34, 36 auf. Ein Gehäuse 34a der Gasdruckfeder 34 der ersten pneumatischen Verstelleinrichtung 16 ist mit einem relativ zum Lenksäulengehäuse 14 positionsfest angeordneten Abschnitt 12a der Vorrichtung 1 verbunden. Eine Kolbenstange 34b der Gasdruckfeder 34 der ersten pneumatischen Verstelleinrichtung 16 ist mit dem Lenksäulengehäuse 14 verbunden.

Die Gasdruckfeder 34, 36 der ersten pneumatischen Verstelleinrichtung 16 und der zweiten pneumatischen Verstelleinrichtung 18 weisen jeweils einen verstellbaren Hub auf. Die Gasdruckfeder 34 der ersten pneumatischen Verstelleinrichtung 16 ist dazu ausgebildet, das Lenksäulengehäuse 14, bei Entriegelung des Lenksäulengehäuses 14, von einer voreingestellten Neigungsstellung N1 in eine Easy-Entry-Stellung N2 oder von der Easy-Entry-Stellung N2 in die voreingestellte Neigungsstellung N1 zu stellen. In der voreingestellten Neigungsstellung N1 ist die Lenksäule 10 im Wesentlichen vertikal angeordnet. Die Gasdruckfeder 34 der ersten pneumatischen Verstelleinrichtung 16 ist dazu ausgebildet, das Lenksäulengehäuse 14, bei Entriegelung des Lenksäulengehäuses 14 und bei Freigeben einer Verstellung des Hubs in der Gasdruckfeder 34, von der voreingestellten Neigungsstellung N1 in eine weitere Neigungsstellung N3 innerhalb des Verstellbereichs des Lenksäulengehäuses 14 zu stellen. Die erste pneumatische Verstelleinrichtung 16 ist somit dazu ausgebildet, das Lenksäulengehäuse 14 von der voreingestellten Neigungsstellung N1 in die Easy-Entry-Stellung N2 und von dort wieder zurück in die voreingestellte Neigungsstellung N1 zu stellen.

Ein Gehäuse 36a der Gasdruckfeder 36 der zweiten pneumatischen Verstelleinrichtung 18 ist mit dem Befestigungspunkt 20 des Kraftfahrzeuges verbindbar. Eine Kolbenstange 36b der zweiten Gasdruckfeder 28 der zweiten pneumatischen Verstelleinrichtung 18 ist mit dem Lenksäulengehäuse 14 verbunden.

Die Kolbenstange 36b der Gasdruckfeder 36 der zweiten pneumatischen Verstelleinrichtung 18 ist bei dem Stellen des Lenksäulengehäuses 14 von der voreingestellten Neigungsstellung N1 in die Easy-Entry-Stellung N2 oder von der Easy-Entry-Stellung N2 in die voreingestellte Neigungsstellung N1 mit dem sich bewegenden Lenksäulengehäuse 14 mitführbar.

Die Gasdruckfeder 36 der zweiten pneumatischen Verstelleinrichtung 18 ist dazu ausgebildet, das Lenksäulengehäuse 14, bei Entriegelung des Lenksäulengehäuses 14 und bei Freigeben einer Verstellung des Hubs der Gasdruckfeder 36, von einer voreingestellten Höhenstellung H1 in eine weitere Höhenstellung H2 innerhalb des Verstellbereichs des Lenksäulengehäuses 14 zu stellen.

Ein (in Fig. 7 nicht gezeigter) Mechanismus zum Verstellen des Hubs der Gasdruckfedern 34, 36 der ersten und zweiten pneumatischen Verstelleinrichtungen 16, 18 ist beispielsweise derart ausgebildet, dass die jeweilige Gasdruckfeder 34, 36 eine erste Hohlkammer aufweist, die einen ersten axialen Endabschnitt und einen zweiten axialen Endabschnitt aufweist, wobei die erste Hohlkammer an dem zweiten axialen Endabschnitt eine Öffnung aufweist. Die Gasdruckfedern 34, 36 weisen des Weiteren eine sich durch die Öffnung erstreckende, axial verschiebbare, erste Kolbenstange auf. Die Gasdruckfedern 34, 36 weisen des Weiteren eine, in oder außerhalb der ersten Hohlkammer angeordnete, zweite Hohlkammer auf.

Die Gasdruckfedern 34, 36 weisen darüber hinaus einen ersten Kolben auf, welcher mit der ersten Kolbenstange an einem, in der ersten Hohlkammer oder der zweiten Hohlkammer angeordneten axialen Endabschnitt der ersten Kolbenstange verbunden und in der ersten Hohlkammer oder der zweiten Hohlkammer beweglich angeordnet ist. Die Gasdruckfedern 34, 36 weisen darüber hinaus einen zwischen dem ersten axialen Endabschnitt und dem ersten Kolben in der ersten Hohlkammer oder der zweiten Hohlkammer beweglich angeordneten zweiten Kolben sowie Mittel zum Feststellen und Freigeben des zweiten Kolbens zum Verstellen eines Hubs der ersten Kolbenstange auf.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, innerhalb des Umfangs der Ansprüche.

Beispielsweise kann der Lagerbock eine andere geeignete Form aufweisen, welche an eine Form des Lenksäulengehäuses in vorteilhafter Weise angepasst ist. In Fig. 1 bis Fig. 7 ist jeweils nur eine gemäß der jeweiligen Darstellung Rückseite des Lagerbocks 12 bzw. ein einzelnes Seitenblech des Lagerbocks 12 gezeigt. Der Lagerbock 12 weist jedoch beidseitig des Lenksäulengehäuses 14 jeweils ein Lagerblech auf, welches zumindest einen Führungsschlitz aufweist, in welchem der Befestigungspunkt 14c des Lenksäulengehäuses 14 verstellbar geführt ist. Der Führungsschlitz der jeweiligen Lagerbleche des Lagerbocks 12 ist entsprechend einer vorgegebenen Bahn gekrümmt, um eine definierte Höhenverstellung der Lenksäule 10 zu ermöglichen.

### Bezugszeichenliste

- 1: Vorrichtung
- 10: Lenksäule
- 12: Lagerbock
- 12a: Abschnitt
- 14: Lenksäulengehäuse
- 14a: erster Schenkel
- 14b: zweiter Schenkel
- 14c: Befestigungspunkt
- 16: erste pneumatische Verstelleinrichtung
- 16a: erster axialer Endabschnitt
- 16b: zweiter axialer Endabschnitt
- 18: zweite pneumatische Verstelleinrichtung
- 18a: erster axialer Endabschnitt
- 18b: zweiter axialer Endabschnitt
- 20: Befestigungspunkt
- 22, 28: zweite Gasdruckfeder
- 22a: Kolbenstange
- 24, 30: erste Gasdruckfeder
- 24a: Kolbenstange
- 26,32: Gehäuse
- 34: Gasdruckfeder
- 34a: Gehäuse
- 34b: Kolbenstange
- 36: Gasdruckfeder
- 36a: Gehäuse
- 36b: Kolbenstange
- 42: erstes Führungsblech
- 43: zweites Führungsblech
- 44: drittes Führungsblech
- 46: Lager
- α: Neigungswinkel
- H1: Höhenstellung
- H2: Höhenstellung
- N1: Neigungsstellung
- N2: Easy-Entry-Stellung
- N3: weitere Neigungsstellung

## Patentansprüche

1. Vorrichtung (1) zum reversierbaren Verstellen einer Lenksäule (10) eines Kraftfahrzeuges, mit
einem Lagerbock (12), in welchem ein Lenksäulengehäuse (14) mit der in dem Lenksäulengehäuse (14) angeordneten Lenksäule (10) verstellbar gelagert ist;
einer ersten pneumatischen Verstelleinrichtung (16), welche an einem ersten axialen Endabschnitt (16a) mit einem relativ zum Lenksäulengehäuse (14) positionsfest angeordneten Abschnitt (12a) der Vorrichtung (1) und an einem zweiten axialen Endabschnitt (16b) mit dem Lenksäulengehäuse (14) verbunden ist, wobei die erste pneumatische Verstelleinrichtung (16) dazu ausgebildet ist, einen Neigungswinkel (α) des Lenksäulengehäuses (14) zu verstellen; und
einer zweiten pneumatischen Verstelleinrichtung (18), welche an einem ersten axialen Endabschnitt (18a) mit einem Befestigungspunkt (20) des Kraftfahrzeuges verbindbar und an einem zweiten axialen Endabschnitt (18b) mit dem Lenksäulengehäuse (14) verbunden ist, wobei die zweite pneumatische Verstelleinrichtung (18) dazu ausgebildet ist, eine Höhe des Lenksäulengehäuses (14) zu verstellen,
**gekennzeichnet durch,**
dass die erste pneumatische Verstelleinrichtung (16) und die zweite pneumatische Verstelleinrichtung (18) jeweils eine erste Gasdruckfeder (24, 30) und eine zweite Gasdruckfeder (22, 28) aufweisen, welche in einem gemeinsamen Gehäuse (26, 32) angeordnet sind, wobei die erste Gasdruckfeder (24, 30) und die zweite Gasdruckfeder (22, 28) in entgegengesetzter Richtung angeordnet sind.

2. Vorrichtung nach Anspruch 1, **dadurch gekennzeichnet, dass** eine Kolbenstange (24a) der ersten Gasdruckfeder (24) der ersten pneumatischen Verstelleinrichtung (16) mit dem Lenksäulengehäuse (14) und eine Kolbenstange (22a) der zweiten Gasdruckfeder (22) der ersten pneumatischen Verstelleinrichtung (16) mit einem relativ zum Lenksäulengehäuse (14) positionsfest angeordneten Abschnitt (12a) der Vorrichtung (1) verbunden ist.

3. Vorrichtung nach Anspruch 1 oder 2, **dadurch gekennzeichnet, dass** die erste Gasdruckfeder (24) der ersten pneumatischen Verstelleinrichtung (16) dazu ausgebildet ist, das Lenksäulengehäuse (14), bei Entriegelung des Lenksäulengehäuses (14), von einer voreingestellten Neigungsstellung (N1) in eine Easy-Entry-Stellung (N2) oder von der Easy-Entry-Stellung (N2) in die voreingestellte Neigungsstellung (N1) zu stellen, in welcher die Lenksäule (10) im Wesentlichen vertikal angeordnet ist.

4. Vorrichtung nach einem der Ansprüche 1 bis 3, **dadurch gekennzeichnet, dass** die zweite Gasdruckfeder (22) der ersten pneumatischen Verstelleinrichtung (16) dazu ausgebildet ist, das Lenksäulengehäuse (14), bei Entriegelung des Lenksäulengehäuses (14) und bei Lösen der zweiten Gasdruckfeder (22), von der voreingestellten Neigungsstellung (N1) in eine weitere Neigungsstellung (N3) innerhalb eines Verstellbereichs des Lenksäulengehäuses (14) zu stellen.

5. Vorrichtung nach einem der Ansprüche 1 bis 4, **dadurch gekennzeichnet, dass** die erste Gasdruckfeder (24) der ersten pneumatischen Verstelleinrichtung (16) eine Gasdruckfeder herkömmlicher Bauart ist, wobei eine Position der Kolbenstange (22a) der zweiten Gasdruckfeder (22) der ersten pneumatischen Verstelleinrichtung (16) feststellbar ist, und wobei die erste Gasdruckfeder (24) der ersten pneumatischen Verstelleinrichtung (16) eine geringere Federkraft als die zweite Gasdruckfeder (22) der ersten pneumatischen Verstelleinrichtung (16) aufweist.

6. Vorrichtung nach einem der Ansprüche 1 bis 5, **dadurch gekennzeichnet, dass** eine Kolbenstange (30a) der ersten Gasdruckfeder (30) der zweiten pneumatischen Verstelleinrichtung (18) mit dem Lenksäulengehäuse (14) verbunden ist und eine Kolbenstange (28a) der zweiten Gasdruckfeder (28) der zweiten pneumatischen Verstelleinrichtung (18) mit dem Befestigungspunkt (20) des Kraftfahrzeuges verbindbar ist.

7. Vorrichtung nach Anspruch 6, **dadurch gekennzeichnet, dass** die Kolbenstange (30a) der ersten Gasdruckfeder (30) der zweiten pneumatischen Verstelleinrichtung (18) bei dem Stellen des Lenksäulengehäuses (14) von der voreingestellten Neigungsstellung (N1) in die Easy-Entry-Stellung (N2) oder von der Easy-Entry-Stellung (N2) in die voreingestellte Neigungsstellung (N1) mit dem sich bewegenden Lenksäulengehäuse (14) mitführbar ist.

8. Vorrichtung nach Anspruch 6 oder 7, **dadurch gekennzeichnet, dass** die zweite Gasdruckfeder (28) der zweiten pneumatischen Verstelleinrichtung (18) dazu ausgebildet ist, das Lenksäulengehäuse (14), bei Entriegelung des Lenksäulengehäuses (14) und bei Lösen der zweiten Gasdruckfeder (28), von einer voreingestellten Höhenstellung (H1) in eine weitere Höhenstellung (H2) innerhalb eines Verstellbereichs des Lenksäulengehäuses (14) zu stellen.

9. Vorrichtung nach einem der Ansprüche 6 bis 8, **dadurch gekennzeichnet, dass** die erste Gasdruckfeder (30) der zweiten pneumatischen Verstelleinrichtung (18) eine größere Federkraft als die zweite Gasdruckfeder (28) der zweiten pneumatischen Verstelleinrichtung (18) aufweist.

## Claims

1. Device (1) for reversibly adjusting a steering column (10) of a motor vehicle, with
a bearing block (12), in which a steering column housing (14) with the steering column (10) arranged in the steering column housing (14) is mounted adjustably;
a first pneumatic adjustment device (16), which is connected at a first axial end portion (16a) to a portion (12a) of the device (1) that is arranged in a fixed position relative to the steering column housing (14) and, at a second axial end portion (16b), to the steering column housing (14), wherein the first pneumatic adjustment device (16) is designed to adjust an angle of inclination (α). of the steering column housing (14); and
a second pneumatic adjustment device (18), which is connected at a first axial end portion (18a) to a fastening point (20) of the motor vehicle and is connected at a second axial end portion (18b), to the steering column housing (14), wherein the second pneumatic adjustment device (18) is designed to adjust a height of the steering column housing (14),
**characterized in that**
the first pneumatic adjustment device (16) and the second pneumatic adjustment device (18) each have a first gas-filled compression spring (24, 30) and a second gas-filled compression spring (22, 28), which gas-filled compression springs are arranged in a common housing (26, 32), wherein the first gas-filled compression spring (24, 30) and the second gas-filled compression spring (22, 28) are arranged in the opposite direction.

2. Device according to Claim 1, **characterized in that** a piston rod (24a) of the first gas-filled compression spring (24) of the first pneumatic adjustment device (16) is connected to the steering column housing (14) and a piston rod (22a) of the second gas-filled compression spring (22) of the first pneumatic adjustment device (16) is connected to a portion (12a) of the device (1) that is arranged in a fixed position relative to the steering column housing (14).

3. Device according to Claim 1 or 2, **characterized in that** the first gas-filled compression spring (24) of the first pneumatic adjustment device (16) is designed to adjust the steering column housing (14), upon unlocking of the steering column housing (14), from a pre-stepped inclination position (N1) into an easy-entry position (N2) or from the easy-entry position (N2) into the pre-set inclination position (N1) in which the steering column (10) is arranged substantially vertically.

4. Device according to one of Claims 1 to 3, **characterized in that** the second gas-filled compression spring (22) of the first pneumatic adjustment device (16) is designed to adjust the steering column housing (14), upon unlocking of the steering column housing (14) and upon release of the second gas-filled compression spring (22), from the pre-set inclination position (N1) into a further inclination position (N3) within an adjustment region of the steering column housing (14) .

5. Device according to one of Claims 1 to 4, **characterized in that** the first gas-filled compression spring (24) of the first pneumatic adjustment device (16) is a gas-filled compression spring of conventional design, wherein a position of the piston rod (22a) of the second gas-filled compression spring (22) of the first pneumatic adjustment device (16) can be determined, and wherein the first gas-filled compression spring (24) of the first pneumatic adjustment device (16) has a smaller spring force than the second gas-filled compression spring (22) of the first pneumatic adjustment device (16).

6. Device according to one of Claims 1 to 5, **characterized in that** a piston rod (30a) of the first gas-filled compression spring (30) of the second pneumatic adjustment device (18) is connected to the steering column housing (14) and a piston rod (28a) of the second gas-filled compression spring (28) of the second pneumatic adjustment device (18) is connectable to the fastening point (20) of the motor vehicle.

7. Device according to Claim 6, **characterized in that**, when the steering column housing (14) is adjusted from the pre-set inclination position (N1) into the easy-entry position (N2) or from the easy-entry position (N2) into the pre-set adjustment position (N1), the piston rod (30a) of the first gas-filled compression spring (30) of the second pneumatic adjustment device (18) can be carried along with the moving steering column housing (14).

8. Device according to Claim 6 or 7, **characterized in that** the second gas-filled compression spring (28) of the second pneumatic adjustment device (18) is designed to adjust the steering column housing (14), upon unlocking of the steering column housing (14) and upon release of the second gas-filled compression spring (28), from a pre-set height position (H1) into a further height position (H2) within an adjustment region of the steering column housing (14).

9. Device according to one of Claims 6 to 8, **characterized in that** the first gas-filled compression spring (30) of the second pneumatic adjustment device (18) has a greater spring force than the second gas-filled compression spring (28) of the second pneumatic adjustment device (18).

## Revendications

1. Dispositif (1) pour le réglage réversible d'une colonne de direction (10) d'un véhicule automobile, comprenant
un support de palier (12) dans lequel est supporté de manière déplaçable un boîtier de colonne de direction (14) avec la colonne de direction (10) disposée dans le boîtier de colonne de direction (14) ;
un premier dispositif de réglage pneumatique (16), qui est connecté au niveau d'une première portion d'extrémité axiale (16a) à une portion (12a) du dispositif (1) disposée fixement en position par rapport au boîtier de colonne de direction (14) et au niveau d'une deuxième portion d'extrémité axiale (16b) au boîtier de colonne de direction (14), le premier dispositif de réglage pneumatique (16) étant réalisé de manière à régler un angle d'inclinaison (α) du boîtier de colonne de direction (14) ; et
un deuxième dispositif de réglage pneumatique (18) qui peut être connecté au niveau d'une première portion d'extrémité axiale (18a) à un point de fixation (20) du véhicule automobile et qui est connecté au niveau d'une deuxième portion d'extrémité axiale (18b) au boîtier de colonne de direction (14), le deuxième dispositif de réglage pneumatique (18) étant réalisé de manière à régler une hauteur du boîtier de colonne de direction (14),
**caractérisé par**
**le fait que** le premier dispositif de réglage pneumatique (16) et le deuxième dispositif de réglage pneumatique (18) présentent chacun un premier ressort de compression à gaz (24, 30) et un deuxième ressort de compression à gaz (22, 28) qui sont disposés dans un boîtier commun (26, 32), le premier ressort de compression à gaz (24, 30) et le deuxième ressort de compression à gaz (22, 28) étant disposés dans des directions opposées.

2. Dispositif selon la revendication 1, **caractérisé en ce qu'**une tige de piston (24a) du premier ressort de compression à gaz (24) du premier dispositif de réglage pneumatique (16) est connectée au boîtier de colonne de direction (14) et une tige de piston (22a) du deuxième ressort de compression à gaz (22) du premier dispositif de réglage pneumatique (16) est connectée à une portion (12a) du dispositif (1) disposée fixement en position par rapport au boîtier de colonne de direction (14).

3. Dispositif selon la revendication 1 ou 2, **caractérisé en ce que** le premier ressort de compression à gaz (24) du premier dispositif de réglage pneumatique (16) est réalisé de manière à régler le boîtier de colonne de direction (14), lors du déverrouillage du boîtier de colonne de direction (14), d'une position d'inclinaison préajustée (N1) à une position d'accès facile (N2) ou de la position d'accès facile (N2) dans la position d'inclinaison préajustée (N1) dans laquelle la colonne de direction (10) est disposée essentiellement verticalement.

4. Dispositif selon l'une quelconque des revendications 1 à 3, **caractérisé en ce que** le deuxième ressort de compression à gaz (22) du premier dispositif de réglage pneumatique (16) est réalisé de manière à régler le boîtier de colonne de direction (14), lors du déverrouillage du boîtier de colonne de direction (14) et lors du relâchement du deuxième ressort de pression à gaz (22), de la position d'inclinaison préajustée (N1) dans une position d'inclinaison supplémentaire (N3) à l'intérieur d'une plage de réglage du boîtier de colonne de direction (14).

5. Dispositif selon l'une quelconque des revendications 1 à 4, **caractérisé en ce que** le premier ressort de compression à gaz (24) du premier dispositif de réglage pneumatique (16) est un ressort de compression à gaz de construction usuelle, une position de la tige de piston (22a) du deuxième ressort de compression à gaz (22) du premier dispositif de réglage pneumatique (16) pouvant être fixée, et le premier ressort de compression à gaz (24) du premier dispositif de réglage pneumatique (16) présentant une plus faible force de ressort que le deuxième ressort de compression à gaz (22) du premier dispositif de réglage pneumatique (16).

6. Dispositif selon l'une quelconque des revendications 1 à 5, **caractérisé en ce qu'**une tige de piston (30a) du premier ressort de compression à gaz (30) du deuxième dispositif de réglage pneumatique (18) est connectée au boîtier de colonne de direction (14) et une tige de piston (28a) du deuxième ressort de compression à gaz (28) du deuxième dispositif de réglage pneumatique (18) peut être connectée au point de fixation (20) du véhicule automobile.

7. Dispositif selon la revendication 6, **caractérisé en ce que** la tige de piston (30a) du premier ressort de compression à gaz (30) du deuxième dispositif de réglage pneumatique (18), lors du réglage du boîtier de colonne de direction (14) de la position d'inclinaison préajustée (N1) dans la position d'accès facile (N2) ou de la position d'accès facile (N2) dans la position d'inclinaison préajustée (N1) peut être entraînée conjointement avec le boîtier de colonne de direction (14) se déplaçant.

8. Dispositif selon la revendication 6 ou 7, **caractérisé en ce que** le deuxième ressort de compression à gaz (28) du deuxième dispositif de réglage pneumatique (18) est réalisé de manière à régler le boîtier de colonne de direction (14), lors du déverrouillage du boîtier de colonne de direction (14) et lors du relâchement du deuxième ressort de compression à gaz (28), d'une position en hauteur préajustée (H1) dans une position en hauteur supplémentaire (H2) à l'intérieur d'une plage de réglage du boîtier de colonne de direction (14).

9. Dispositif selon l'une quelconque des revendications 6 à 8, **caractérisé en ce que** le premier ressort de compression à gaz (30) du deuxième dispositif de réglage pneumatique (18) présente une plus grande force de ressort que le deuxième ressort de compression à gaz (28) du deuxième dispositif de réglage pneumatique (18).
